# EUROPEAN PATENT APPLICATION

(11) **EP 1 681 228 A1**
(43) Date of publication of application: **19.07.2006**
(21) Application number: 06075037.9
(22) Date of filing: 06.01.2006
(51) Int. Cl.: B62H 3/00, B62H 3/08, B62H 5/00, E05B 71/00

(54) **Locking device for bicycles**

(30) Priority: 17.01.2005 NL 1028046; 21.03.2005 NL 1028581
(71) Applicant: Kooymans Beheer B.V., 5611 JC Eindhoven (NL)
(72) Inventor: Kooijmans, Antonius G.P.J., 5616 JC Eindhoven (NL)
(74) Representative: Verhees, Godefridus Josephus Maria

(57) **Abstract**

A locking device (1) has a carrier that is formed by a frame (5), which is provided with an elongated vertical opening (7) for the insertion of a wheel, as well as several locking elements (11) next to each other. The locking elements are present on two opposite to each other situated limiting edges (13) of the opening (7) and stretch across the opening. An end of each strip (11) is near one of the limiting edges and is connected by a hinge to the frame (5). The other end of each strip is opposite the other end of a strip on the opposite limiting edge.

The locking device (9) also has a locking mechanism, which can block the locking elements (11) against turning and can also release them again. In the locked position, the free ends of the strips (11) are at a distance from each other and one or more spokes (17) of the wheel (3) protrude through the opening between the strips opposite each other.

## Description

### BACKGROUND OF THE INVENTION:

### Field of the invention

The invention relates to a locking device for locking an object, comprising a carrier, as well as a locking element connected to it by a hinge.

More in particular the invention relates to a locking device that is suitable for locking a bicycle, in which a wheel of the bicycle can be locked in an opening for the insertion of a wheel.

### Prior art

A locking device for locking a bicycle is generally known. In the known locking device the locking element can be fastened to the carrier by a lock, for example a padlock or chain lock, which as a rule the user has provided and must fasten himself.

### Summary of the invention

An objective of the invention is to provide a locking device of the type described in the preamble in which the user himself does not have to provide a lock. To this end, the locking device according to the invention is characterized in that the locking device comprises a locking mechanism, which can block the locking element in a locked position against turning. The locking mechanism is therefore an inseparable part of the locking device so that a user himself does not necessarily have to provide a lock. Any conceivable mechanism can be used as the locking mechanism to block an element against turning. The locking mechanism can also be made so that it can be activated / controlled by for example an electrical, magnetic or manual signal.

The locking device is preferably provided with a spring that, after a bicycle wheel has pressed back the locking element when placed into the opening, brings the locking element back into the locked position.

An embodiment of the locking device according to the invention is characterized in that the locking element comprises at least one strip. The strip is hereby preferably connected to the carrier by a hinge, which can be turned in two opposite directions.

In a further embodiment of the locking device according to the invention the locking element also has at least one further strip, in which one end of the strip is connected by a hinge to the carrier and the other end is connected by a hinge to an end of the further strip, which is longer is than the strip, and in which both strips are parallel to each other when in the locked position. The further strip is hereby as it were connected to the carrier via a double hinge construction, of which the strip is a part. Both hinges need only to be pivotable in one direction in this.

Preferably the locking device in this latter embodiment comprises a further locking mechanism, which can block both strips from turning with respect to each other. This means that each hinge and therefore every turning direction of the further strip as well can be blocked separately.

A further embodiment of the locking device according to the invention is characterized in that the locking device comprises several locking elements next to each other, which are connected by a hinge to the carrier.

A still further embodiment of the locking device according to the invention is characterized in that the locking device comprises a further carrier, as well as a further locking element connected to it by a hinge and a further locking mechanism, which can block the further locking element in a locked position against turning, in which the carriers when the locking device is used in practice are found on two opposite limiting edges of an opening, in which the locking elements stretch in the lengthwise direction mainly at right angles to the limiting edges, and in which an end of each locking element is near one of the limiting edges and with the other end is opposite the other end of a locking element on the opposite limiting edge.

A favourable embodiment of this is characterized in that the ends that are facing each other of two locking elements opposite each other are connected together via a flexible element, which forms a loop in which an object to be clamped during use, in particular a rim with thereon a wheel tyre, is enclosed. This means a bicycle can be locked with its wheel, and can also be held so that no extra provisions are needed to hold a bicycle upright.

Another embodiment of this is characterized in that the ends facing each other of two locking elements opposite each other are provided with a recess, in which an object to be clamped in the locked position, in particular a rim with thereon a bicycle tyre, is enclosed in the recesses opposite to each other.

Still another embodiment of this is characterized in that the locking elements at or near the ends facing each other of two locking elements opposite each other are provided with an elastic element, in which during use an object to be clamped, in particular a rim with thereon a bicycle tyre, can be clamped between the elastic elements opposite each other, in which these elastic elements change shape.

Again another embodiment of this is characterized in that the carrier comprises a frame, which is provided with an opening for the insertion of an object to be locked, in particular a bicycle wheel, in which the locking element in the locked position anyhow stretches partly in front of or into the opening.

### Brief description of the drawings

The invention will be elucidated more fully below on the basis of drawings in which embodiments of the locking device according to the invention are shown. In these drawings:
Figure 1 shows a first embodiment of the locking device according to the invention with a bicycle wheel locked therein;
Figures 2, 3 and 4 show a cross-section of the locking device shown in figure 1 during the insertion of a wheel, when the wheel is being held in the locked position, and when the wheel is being removed;
Figures 5 and 6 show a cross-section of a second embodiment of the locking device according to the invention during the insertion and removal of a wheel respectively;
Figures 7 and 8 show a cross-section of a third embodiment of the locking device according to the invention during the insertion of a wheel and in the locked position respectively;
Figures 9 and 10 show a cross-section of a fourth embodiment of the locking device according to the invention during the insertion of a wheel and in the locked position respectively;
Figures 11 and 12 show a cross-section of a fifth embodiment of the locking device according to the invention during the insertion of a wheel and in the locked position respectively; and
Figure 13 shows a sixth embodiment of the locking device according to the invention with a bicycle wheel locked therein.

### Detailed description of the drawings

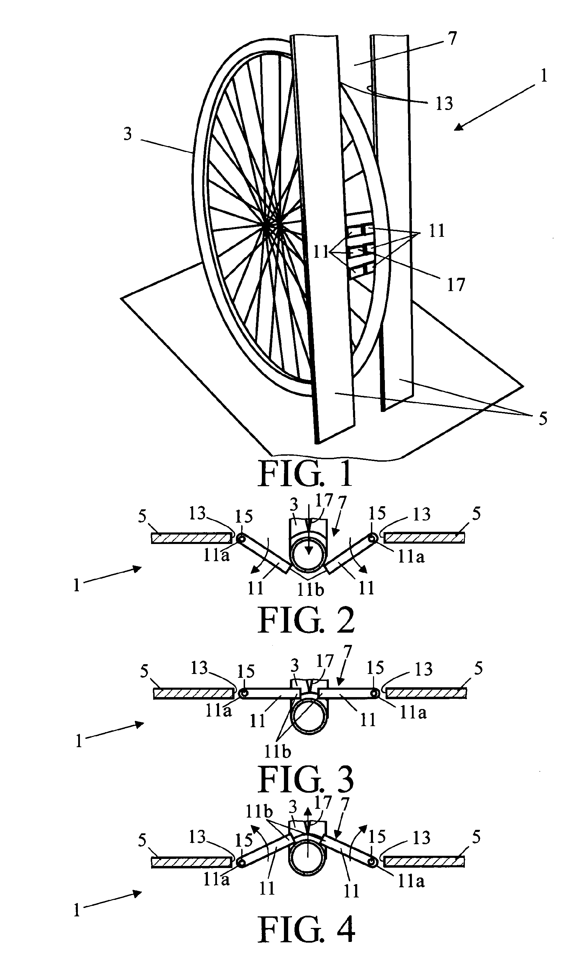

Figure 1 shows a first embodiment of the locking device 1 according to the invention with a bicycle wheel 3 locked therein. The rest of the bicycle is not shown as this is irrelevant to the action of the locking device. The locking device 1 has a carrier that is formed by a frame 5, which is provided with an elongated vertical opening 7 for the insertion of a wheel, as well as several locking elements 11 next to each other, which are connected to the frame by a hinge and which stretch across the opening. The locking device 1 also has a locking mechanism (not shown) that can block the locking elements 11 against turning and can also release them again.

The locking elements are formed by strips 11, which are on two opposite to each other situated limiting edges 13 of the opening 7 and which stretch in a lengthwise direction at right angles to the limiting edges across the opening. An end 11a of each strip 11 is near one of the limiting edges and is connected by a hinge to the frame 5. The other end 11b of each strip is present at a distance opposite the other end of a strip that is on the opposite limiting edge.

Figures 2, 3 and 4 show a cross-section of the locking device 1, respectively during the insertion of a wheel 3, when the wheel is being held in the locked position, and when the wheel is being removed. The strips 11 can turn from a locked position (see figure 3) in two opposite directions for the insertion or release of the wheel respectively. In the middle position, the strips 11 can be blocked against turning by the locking mechanism, for example by securing the shaft 15 on which the strips 11 are fastened. The strips 11 are brought back to the locked position shown in figure 3 by means of a torsion spring (not shown) from the positions shown in figures 2 and 4.

In the locked position (see figure 3) the free ends 11b of the strips 11 are at a distance from each other and one or more spokes 17 of the wheel 3 protrude through the opening between the strips opposite each other.

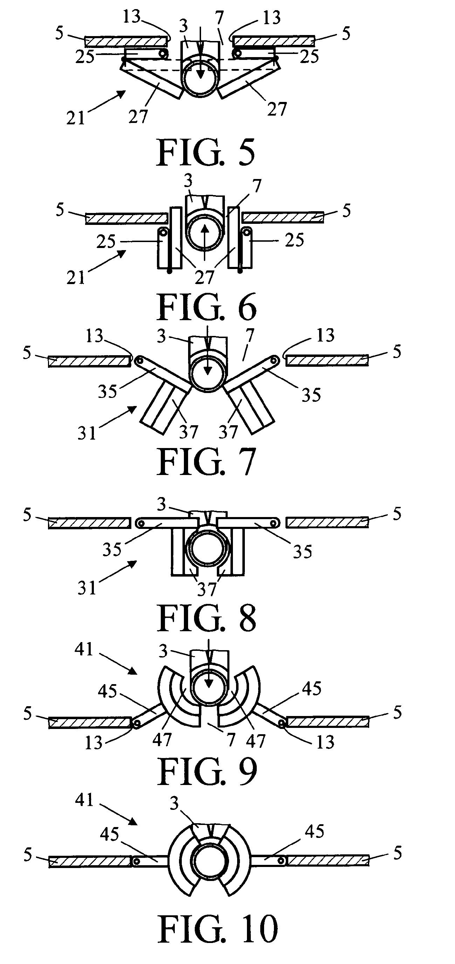

Figures 5 to 13 show several alternative embodiments of the locking device according to the invention.

Figures 5 and 6 show a second embodiment of the locking device 21 according to the invention in cross-section during the insertion and removal respectively of a bicycle wheel 3. The locking elements are hereby formed by two strips 25, 27 connected to each other by a hinge, in which an end of one of the strips 25 is connected by a hinge to the frame 5 near one of the limiting edges 13 of the opening 7 and the other end is connected by a hinge to an end of the further strip 27, which is longer than the strip 25. Both strips 25, 27 in the locked position (the position of strip 27 shown by the dotted line) are parallel to each other and next to the frame 5, in which the strip 25 stretches out from the opening 7 and the further strip 27 stretches towards the opening 7 and is partly present in front of the opening. The further strips 27 of the locking elements can thus also turn again in two directions. The locking device 21 has a locking mechanism to block the hinge between the frame 5 and the strip 25 (this locking mechanism can block the wheel 3 against removal) and a further locking mechanism to block the hinge between both strips 25 and 27 (this locking mechanism can the block the locking elements so that a wheel cannot be inserted into the opening). Also hereby the strips 25, 27 are brought into the locked position by means of torsion springs (not shown).

Figures 7 and 8 show a third embodiment of the locking device 31 according to the invention in cross-section during the insertion of a bicycle wheel 3 and when the wheel is being held in the locked position 3 respectively. Hereby elastic elements 37 are present near the ends facing each other of two locking elements 35 opposite each other. The rim with thereon the tyre of the wheel 3 is hereby clamped in the locked position between the elastic elements 37 opposite each other, in which these elastic elements are around the rim and the tyre. This means that a bicycle can be locked, and also held so that no extra construction is needed to hold the bicycle upright.

Figures 9 and 10 show a fourth embodiment of the locking device 41 according to the invention in cross-section during the insertion of a wheel 3 and when the wheel is being held in the locked position 3 respectively. Hereby the ends facing each other of two locking elements 45 opposite each other are provided with a recess 47, in which in the locked position the rim with thereon the tyre of a wheel 3, is enclosed in the recesses 47 opposite each other.

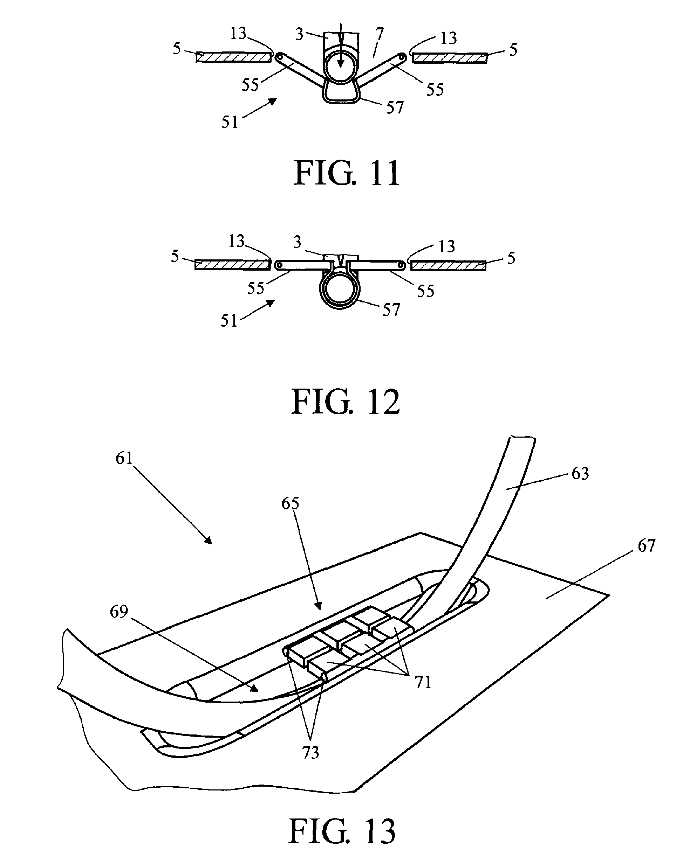

Figures 11 and 12 show a fifth embodiment of the locking device 51 according to the invention in cross-section during the insertion of a bicycle wheel 3 and when the wheel is being held in the locked position 3 respectively. Hereby a flexible element 57, here in the form of a belt that forms a loop in which the rim with thereon the tyre of a wheel 3 is enclosed in the locked position, is present on the ends facing each other of two locking elements 55 opposite each other.

Figure 13 finally shows a sixth embodiment of the locking device 61 according to the invention, in which a wheel 63 is present in the locked position. The locking device 65 of this locking device 61 is equal to that of the first embodiment shown in figure 1. However, in this locking device 61, the frame 67 is formed by a plate anchored in the ground, which is provided with an elongated horizontal opening 69 for the insertion of the wheel.

The locking device 65 also now has again several locking elements 71 next to each other, which are connected by a hinge around shafts 73 to the frame 67 and which stretch across the opening 69. The locking device 65 has also again a locking mechanism (not shown), which can block the locking elements 71 against turning and can also release them again.

Although in the above the invention is explained on the basis of the drawings, it should be noted that the invention is in no way limited to the embodiments shown in the drawings. The invention also extends to all embodiments deviating from the embodiments shown in the drawings within the context defined by the claims. For example, the frame can also be at an angle to the vertical and horizontal directions.

## Claims

1. Locking device for locking an object, in particular a bicycle, comprising a carrier, as well as a locking element connected to it by a hinge, **characterized in that** the locking device comprises a locking mechanism that can block the locking element in a locked position against turning.

2. Locking device according to claim 1, **characterized in that** the locking element comprises at least one strip.

3. Locking device according to claim 2, **characterized in that** the locking element also comprises at least one further strip, in which one end of the strip is connected by a hinge to the carrier and the other end is connected by a hinge to the end of the further strip, which is longer than the strip, and in which both strips are parallel to each other in the locked position.

4. Locking device according to claim 3, **characterized in that** the locking device comprises a further locking mechanism that can block both strips against turning with respect to each other.

5. Locking device according to one of the preceding claims, **characterized in that** the locking device comprises several locking elements next to each, which are connected by a hinge to the carrier.

6. Locking device according to one of the preceding claims, **characterized in that** the locking device comprises a further carrier, as well as a further locking element connected to it by a hinge and a further locking mechanism that can block the further locking element in a locked position against turning, in which the carriers when the locking device is used in practice are on two limiting edges of an opening opposite each other, in which the locking elements in a lengthwise direction stretch mainly at right angles to the limiting edges, and in which an end of each locking element is near one of the limiting edges and the other end is opposite the other end of a locking element on the opposite limiting edge.

7. Locking device according to claim 6, **characterized in that** the ends facing each other of two locking elements opposite each other are connected to each other via a flexible element that forms a loop in which during use an object to be clamped is enclosed, in particular a rim with thereon a tyre of a wheel.

8. Locking device according to claim 6, **characterized in that** the ends facing each other of two locking elements opposite each other are provided with a recess, in which in the locked position an object to be clamped, in particular a rim with thereon a bicycle tyre, is enclosed in the recesses opposite each other.

9. Locking device according to claim 6, **characterized in that** the locking elements at or near the ends facing each other of two locking elements opposite each other are provided with an elastic element, in which during use an object to be clamped, in particular a rim with thereon a bicycle tyre, is clamped between the elastic elements opposite each other, in which these elastic elements change shape.

10. Locking device according to one of the preceding claims, **characterized in that** the carrier comprises a frame that is provided with an opening for the insertion of an object to be locked, in particular a bicycle wheel, in which the locking element in the locked position anyhow stretches partly in front of or into the opening.
